# EUROPEAN PATENT APPLICATION

(11) **EP 4 286 585 A1**
(43) Date of publication of application: **06.12.2023**
(21) Application number: 22744946.9
(22) Date of filing: 24.01.2022
(51) Int. Cl.: D21H 27/30, D21H 27/10, D21H 11/04, D21H 11/08, B32B 29/02

(54) **WHITE TOP KRAFTLINER PAPER, METHOD FOR PRODUCING SAID PAPER, USE OF THE PAPER AND PACKAGING**

(30) Priority: 27.01.2021 BR 102021001514
(71) Applicant: Klabin S.A., 04538-132 São Paulo (BR)
(72) Inventor: DA SILVA, Juliana Cristina, 84275-000 Harmonia Telêmaco Borba - PR (BR); VIEIRA, Osvaldo, 84275-000 Harmonia Telêmaco Borba - PR (BR); SILVA FRANCO DA QUINTA, Ricardo, 84275-000 Harmonia Telêmaco Borba - PR (BR); BARRETO CABRAL, Vitor, 84275-000 Harmonia Telêmaco Borba - PR (BR)
(74) Representative: Santi, Filippo
(86) International application number: PCT/BR2022/050018
(87) International publication number: WO 2022/160024

(57) **Abstract**

The present invention relates to White Top Kraftliner paper comprising two to three layers of bleached or unbleached chemical fibers wherein the layers total 100% short eucalyptus chemical fiber, and at least one bulk additive. It also refers to the production process of said paper, use of said paper, and packaging produced with said paper.

## Description

### TECHNICAL FIELD

The present invention relates to a White Top Kraftliner paper comprising two to three layers of chemical fibers, which may be bleached and/or unbleached, in which the layers total 100% of short chemical eucalyptus fiber, and at least one dough additive. It also refers to the production process of said paper, its use and a package produced with said paper.

### BACKGROUND OF THE INVENTION

The term White Top Kraftliner paper is widely used in the international market and is defined as a paper predominantly formed from primary kraft pulp.

In this way, White Top Kraftliner papers can be produced from mixtures of chemical fibers (long fibers and short fibers). The composition of the pulps depends on the paper quality requirements and the resulting paper grammage can range from 100 to 300 g/m² in most cases.

Unlike Brown Kraftliner paper, which is also predominantly formed from primary kraft pulp, White Top Kraftliner has a covering layer composed of bleached primary kraft pulp, which gives this layer differentiated optical properties, being indicated for boxes with high demand for print quality, where whiteness, roughness and collage are also evaluated.

White Top Kraftliner papers play an important role in packaging, such as in corrugated cardboard boxes, as they participate in their composition as an outer layer, and help define their properties. As these boxes protect their contents from impact during handling, transport, storage, stacking, extreme temperatures and humidity, White Top Kraftliner paper must meet general strength requirements such as: tensile strength, burst strength, strength compression, ply bond, in addition to providing adequate porosity and Cobb values.

Burst resistance and Short-span Compression Test, or simply called SCT, are considered the most important resistance properties for White Top Kraftliner type papers. These properties are good indicators of box performance, strength and flexibility during converting and use of corrugated cardboard.

Typical applications for White Top Kraftliner include packaging for: food, beverages, cosmetics, electronics, hygiene and cleaning, horticultural products and flowers, electrical materials, chemicals and derivatives, clothing and footwear, glass and ceramics. Packaging with greater added value, with prints with four colors or more, the white substrate highlights and works with one more color, being another differential of White Top Kraftliner over Brown Kraftliner.

Document BR 11 2016 006857-2 discloses a multilayer cardboard comprising pulp of cellulosic fibers, in which 100% of the total fiber content of said cardboard are hardwood fibers. The document further discloses that the paperboard in question may also comprise dry strength additives, such as starch. However, the application of starch is not superficial and the paper described has at least three layers.

The patent application WO 1992013137 A1 describes a Kraftliner paper formed by several layers, preferably between 2 and 3, with a fibrous composition of the covering layer formed from 50 to 100% of bleached hardwood sulfate pulp, added from 0 to 15% of pigment, calculated on a dry pulp basis. The remainder of the fibrous composition of the covering layer is composed of bleached or unbleached softwood sulfate pulp. In the related claim, the application of superficial starch was not mentioned.

Patent application PI 0918112-1 discloses the use of a new strength agent in the papermaking process, such agent being hydrophobic starch. In addition to being more focused on the starch itself rather than the paper, the starch application of such a document is not superficial. However, so far the state of the art is deficient in disclosing a White Top Kraftliner paper with all the qualities of the paper of the present invention. That is because currently a better quality (in terms of strength) White Top Kraftliner paper is produced on machines with two to three ply construction, with 50 - 100% long chemical fibre. This better physical-mechanical resistance is provided by the better connection between fibers.

Although the state-of-the-art paper performs well in the box conversion step, this paper has the following shortcomings:
- Leaf formation is not good and has dark and light spots or a flocculated appearance that can influence physical-mechanical properties;
- The surface of the sheet is rougher and directly impacts the quality of the print;
- Appearance of holes in the sheet structure; and
- The cost of this paper is less efficient, that is, its production cost is high.

### OBJECTIVE OF THE INVENTION

It is a first objective of the present invention to provide a White Top Kraftliner paper comprising two to three layers of kraft chemical fibers, in which the layers total 100% short chemical eucalyptus fiber on a dry mass basis and at least one additive. Chemical fibers can be bleached or unbleached or mixtures and compositions thereof.

It is a second objective to describe a production process of the said White Top Kraftliner paper.

A third objective is the use of White Top Kraftliner paper for the manufacture of a package, such as a box comprising said paper and even a package for various applications.

### SUMMARY OF THE INVENTION

The present invention has as one of its objectives to provide a paper of exceptional quality comprising two to three layers of chemical fibers in which the layers total 100% short chemical fiber on a dry mass basis; and at least one dough additive.

With this paper, the present invention presents a new solution to technical problems faced, since the White Top Kraftliner paper of the present invention provides:
- Improved sheet formation, as the use of this type of fiber reduces the flocculated appearance;
- Reduction of sheet surface roughness, improving printing quality;
- Filling of empty spaces between fibers, reducing the risk of holes appearing;
- Reduction in the cost of paper, making the product more competitive;
- Improvement in the physical-mechanical properties of the paper with the application of a surface mass additive; and
- Paper with a lower grammage, when compared to paper produced with a mixture of fibers.

Furthermore, the present invention relates to the production process of said paper and a package produced with said paper.

### DESCRIPTION OF THE FIGURES

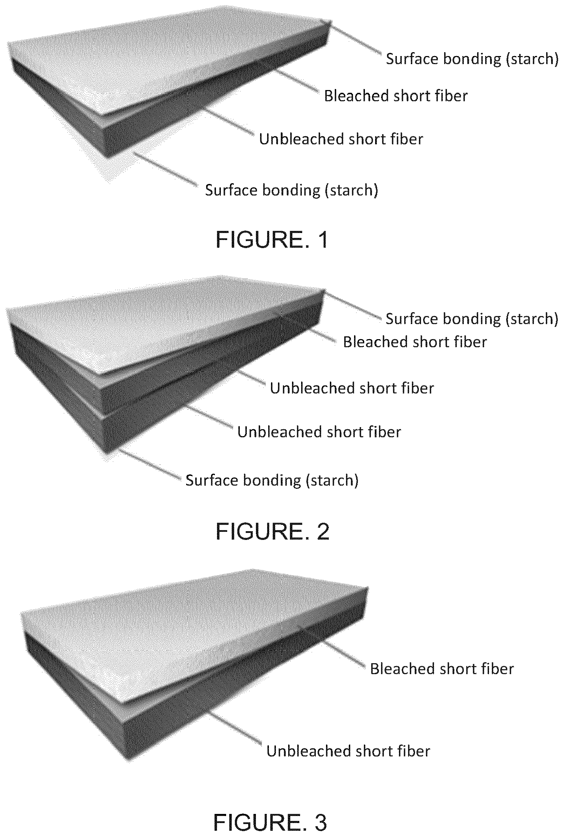

Figure 1 - Illustrates one of the possible configurations of the present invention for a White Top Liner paper with two layers with application of surface starch.
Figure 2 - Illustrates one of the possible configurations of the present invention for a White Top Liner paper with three layers and application of surface starch.
Figure 3 - Illustrates one of the possible configurations of the present invention for a White Top Liner paper with two layers (without application of surface starch).

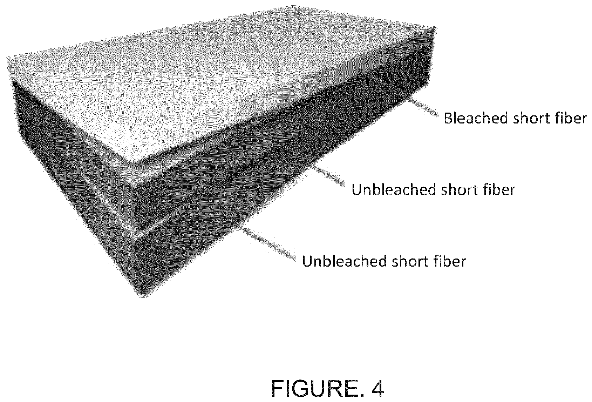

Figure 4 - Illustrates one of the possible configurations of the present invention for a White Top Liner paper with three layers (without application of surface starch).

### DETAILED DESCRIPTION OF THE INVENTION

The present invention relates to a White Top Kraftliner paper comprising (i) two to three layers of chemical fibers in which the layers total 100% short chemical eucalyptus fiber on a dry mass basis; and (ii) at least one dough additive.

In one embodiment of the present invention, the short chemical fibers present in the White Top Kraftliner paper composition are short eucalyptus fibers, which can be bleached and/or unbleached or mixtures thereof, depending on the layer.

A White Top Kraftliner paper with a higher content of eucalyptus short fiber provides a product with better quality, lower grammage and lower cost.

In one aspect of the invention, White Top Kraftliner paper has one or two base layers comprising unbleached short chemical fiber and a surface or cover layer formed by bleached short chemical fiber.

One of the technical problems observed with the use of short chemical fibers is the fact that the physical-mechanical properties of short chemical eucalyptus fibers are inferior to long chemical fibers for some properties. In order for this technical problem to be solved, the application of a mass additive on paper was explored in the present invention.

In this regard, at least one of the layers of the present invention may contain bulk additives, such as: starch, polymers and nanocelluloses or mixtures thereof.

Nanocelluloses are selected from: microfibrillated cellulose, nanofibrillated cellulose, nanocrystalline cellulose, cellulose filaments or mixtures thereof.

Mass additives can be applied to the surface layer or cover of the paper and even between the layers that make up the paper.

Nanocelluloses can also be applied as single components or in formulations with other renewable or non-renewable polymers.

In a preferred embodiment, the mass additive is applied to the surface or coating of the paper.

In a preferred embodiment, the dough additive is starch.

A layer of mass additive, preferably starch, can be applied to the surface or cover of the paper, in order to compensate for losses in physical and mechanical strength when the fraction of long fiber in the composition is reduced.

Thus, in a more preferred embodiment, the White Top Kraftliner paper of the present invention is composed of two to three layers of chemical fibers in which the layers comprise 100% short chemical eucalyptus fiber, with a layer of starch applied to the surface of the paper.

Preferably, the concentration of the mass additive can be from 0.1 to 30 kg additive/t of paper.

The total replacement of long fiber by short fiber, with application on the surface or covering of the starch paper, results in a product with excellent formation and consequent quality with regard to: resistance to bursting, tensile stiffness, resistance to tensile strength, tear resistance, Gurley porosity, SCT (Short-span Compression Test), whiteness, Bendtsen roughness and impression.

The White Top Kraftliner papers of the present invention were produced following the following steps:
a) preparation of unbleached chemical pulps of short eucalyptus fibers;
b) preparation of the chemical pulp of bleached short fibers (ECF) of eucalyptus;
c) feeding the fibers from step a) and b), in the form of suspension, on a sheet-forming table, where partial dewatering occurs; and
d) subsequent pressing and drying to remove residual water.

After the steps described above, the dry leaf was rolled and converted into coils with specified sizes. The White Top Kraftliner paper of the present invention was produced in a grammage of 150 g/m².

The packaging of the present invention comprises the White Top Kraftliner paper of the present invention in box format.

Comparative tests were carried out and the results obtained were surprising, in which the White Top Kraftliner paper produced with three layers comprising only short chemical eucalyptus fibers presented physical and mechanical properties superior to papers with three layers produced with long chemical fibers in its composition, used as a reference. This is totally unexpected and provided by the coating of White Top Kraftliner paper with starch on the surface of the paper.

### TESTS

In order to evaluate the performance of the White Kraftliner paper of the present invention, a series of industrial tests were carried out.

The following were compared:
a) The White Kraftliner paper of the present invention comprises 3 layers (base, middle and cover) in which the layers comprise 100% short chemical eucalyptus fibers, with
b) a reference paper, produced on a three-ply paper machine, consisting of:
   i. by the base layer with 92% short semi-chemical eucalyptus fiber and 8% long chemical fiber,
   ii. through the middle layer with 78% short semi-chemical eucalyptus fiber and 22% long chemical fiber and
   iii. by the cover layer with 100% bleached chemical fiber (ECF) short eucalyptus and 19 to 21 % natural calcium carbonate (GCC) in this layer.

All tests were performed on a paper machine with three layers and superficial application of starch.

Both reference papers and the present invention were converted into boxes and presented the same performance in terms of quality.

The ranges of physical-mechanical properties of short eucalyptus chemical fibers that are acceptable to be used, in base and middle layers, in the production of White Top Kraftliner paper of the present invention are shown in Table 1.

**Table 1 - Physical-Mechanical Properties of Short Chemical Fibers (Presented as an index to exclude influence of sheet weight)**

| **Physical-Mechanical Property** | **Limits** |
|---|---|
| Fiber Length (mm) | 0.80-1.00 |
| Width (µm) | 21.0-24.0 |
| Fines (%) | 8.0-11.0 |
| Kappa Number (mL KMnO4/g) | 60.0-110.0 |
| °SR | 20-40 |
| Traction Index (N.m/g) | 38.0-60.0 |
| Tear Index (mN.m2/g) | 5.5-9.0 |
| Burst Index (kPa.m2/g) | 1.8-3.8 |

All tests to determine the physical and mechanical properties of White Top Kraftliner paper were performed according to the methods and standards listed in Table 2 below, after conditioning in an air-conditioned environment at a temperature of 23 °C and 50% relative humidity (ISO 187).

**Table 2 - Standards and Test Methods Used**

| | |
|---|---|
| Physical-Mechanical Property | Standard |
| Burst Resistance (kPa) | ISO 2758 |
| SCT (kN/m) | ISO 9895 |
| Whiteness (%) | ISO 2470-1 |
| MD Tensile Stiffness (kN/m) | ISO 1924-3 |
| CD Tensile Stiffness (kN/m) | ISO 1924-3 |
| Bendtsen roughness | ISO 8791-2 |
| Gurley Porosity (s/dL) | ISO 5636-5 |

In the production of the White Top Kraftliner paper of the present invention, short eucalyptus chemical fibers were used, whose most important physical and mechanical properties are shown in Table 3.

**Table 3 - Physical-Mechanical Properties of Short Chemical Fibers**

| **Physical-Mechanical Property** | **Limits** |
|---|---|
| Kappa Number (mL KMnO4/g) | 99.2 |
| °SR | 30 |
| Traction Index (N.m/g) | 52.5 |
| Tear Index (mN.m2/g) | 7.1 |
| Burst Index (kPa.m2/g) | 3.5 |

The results of the most important physical-mechanical properties of White Top Kraftliner paper with 100% short chemical eucalyptus fiber in a grammage of 150 g/m², with and without application of superficial starch (0 to 30 kg Starch/t paper ), and the reference paper, are presented in Table 4. The paper used as a reference was KlaLiner White paper, produced and marketed by Klabin, which has in its long.

**Table 4 - Physical-mechanical properties of White Top Kraftliner paper with 100% short chemical eucalyptus fiber in a grammage of 150 g/m², with and without application of surface starch, and the reference paper KlaLiner White (Average Values 2019).**

| Property/Configuration | With surface starch | Without surface starch | Reference (KlaLiner White Paper) |
|---|---|---|---|
| Burst Resistance (kPa) | 600 | 557.01 | 499 |
| SCT (kN/m) | 3.9 | 3.33 | 3.42 |
| Whiteness (%) | 80.7 | 80.62 | 78 |
| MD Tensile Stiffness (kN/m) | 1358.1 | 1372.4 | 1280.9 |
| CD Tensile Stiffness (kN/m) | 627.6 | 606.13 | 580.7 |
| Bendtsen Roughness | 600 | 854.62 | 1013.8 |
| Gurley Porosity (s/dL) | 77.1 | 64.04 | 50 |

From the data presented in Table 4, it is possible to observe that the comparison of the main properties of resistance to bursting, SCT and Bendtsen roughness of the kraftliner paper with surface starch of the present invention in relation to the reference paper shows increases of 8%, 14% and 40.8%, respectively, for the paper of the present invention. These results demonstrate the level of excellence of White Top Kraftliner paper produced with 100% short chemical eucalyptus fibers.

Comparing White Top Kraftliner paper produced with 100% short chemical fibers with and without application of surface starch, the importance of this operation on the physical-mechanical properties of this product is noted.

Since examples of preferred embodiments have been described, it should be understood that the scope of the present invention covers other possible variations and is limited only by the content of the appended claims, including possible equivalents.

## Claims

1. White Top Kraftliner type paper, **characterized by** the fact that it comprises:
(i) two to three layers of short chemical fiber, where the layers total 100% short chemical fiber on a dry mass basis; and
(ii) at least one dough additive.

2. White Top Kraftliner type paper, according to claim 1, **characterized by** the fact that the short chemical fiber is bleached or unbleached or a mixture thereof.

3. White Top Kraftliner type paper, according to claim 1, **characterized by** the fact that the short chemical fiber is derived from eucalyptus.

4. Paper of the White Top Kraftliner type, according to any of claims 1 to 3, **characterized by** the fact that the mass additive is applied on the surface or cover layer of the paper and between the layers that make up the paper.

5. White Top Kraftliner type paper, according to claim 4, **characterized by** the fact that the surface or top layer is formed by bleached short chemical fiber.

6. White Top Kraftliner type paper, according to any of claims 1 to 5, **characterized by** the fact that the mass additives are selected from the group consisting of starch, polymers and nanocelluloses or mixtures thereof.

7. White Top Kraftliner type paper, according to claim 6, **characterized by** the fact that the nanocelluloses are selected from microfibrillated cellulose, nanofibrillated cellulose, nanocrystalline cellulose, cellulose filaments or mixtures thereof.

8. White Top Kraftliner type paper, according to any of claims 1 to 7, **characterized by** the fact that the mass additive concentration is from 0.1 to 30 kg additive/t of paper.

9. White Top Kraftliner type paper, according to any of claims 1 to 8, **characterized by** the fact that said paper has a grammage of 100 to 300 g/m².

10. White Top Kraftliner paper production process, as defined in any of claims 1 to 9, **characterized by** the fact that it comprises the steps of:
a) preparation of unbleached short fiber chemical pulps derived from eucalyptus;
b) preparation of chemical pulp of bleached short fibers (ECF) derived from eucalyptus;
c) feeding the fibers from steps a) and b), in the form of suspension, on a sheet-forming table, where partial dewatering occurs;
d) pressing and drying to remove residual water; and
e) dry sheet winding and conversion into coils of specified sizes.

11. Use of White Top Kraftliner paper as defined in any of claims 1 to 9, **characterized by** the fact that it is for the manufacture of packaging, such as boxes.

12. Packaging, **characterized by** the fact that it comprises White Top Kraftliner paper as defined in any of claims 1 to 9 for the production of boxes for food, beverages, cosmetics, electronics, hygiene and cleaning, horticultural products and flowers, electrical materials, chemicals and derivatives, clothing and footwear, glass and ceramics.
